Europäisches Patentamt

European Patent Office

Office européen des brevets

(11) Veröffentlichungsnummer: **0 335 165 B1**

(12) **EUROPÄISCHE PATENTSCHRIFT**

(45) Veröffentlichungstag der Patentschrift: **18.11.93**

(21) Anmeldenummer: **89104528.8**

(22) Anmeldetag: **14.03.89**

(51) Int. Cl.⁵: **C08K  13/04**, C08L 77/00,
//(C08K13/04,7:02,3:22),
(C08L77/00,23:02)

(54) **Durch Magnesiumhydroxid flammhemmend eingestellte faserverstärkte thermoplastisch verarbeitbare Polyamidformmasse, Verfahren zu ihrer Herstellung und ihre Verwendung.**

(30) Priorität: **28.03.88 DE 3810519**

(43) Veröffentlichungstag der Anmeldung:
**04.10.89 Patentblatt  89/40**

(45) Bekanntmachung des Hinweises auf die
Patenterteilung:
**18.11.93 Patentblatt  93/46**

(84) Benannte Vertragsstaaten:
**AT CH DE FR GB IT LI**

(56) Entgegenhaltungen:
**EP-A- 0 052 868**
**EP-A- 0 129 974**

(73) Patentinhaber: **EMS-INVENTA AG**

**CH-8001 Zürich(CH)**

(72) Erfinder: **Schmid, Eduard, Dr. sc. nat.**
**Valbeuna 12**
**CH-7402 Bonaduz(CH)**
Erfinder: **Lüdi, Doris, Ing. HTL**
**Sardonastrasse 3**
**CH-7000 Chur(CH)**

(74) Vertreter: **Müller-Boré & Partner Patentanwälte**
**Isartorplatz 6**
**Postfach 26 02 47**
**D-80059 München (DE)**

## Beschreibung

Die Flammfesteinstellung von thermoplastisch verarbeitbaren Polymeren, insbesondere von Polyamiden, ist bekannt. Für diesen Zweck werden beispielsweise Halogenverbindungen verwendet, die vorzugsweise mit einem Synergisten, wie beispielsweise Antimontrioxid, eingesetzt werden.

Der Nachteil derart flammfest eingestellter Polymere liegt darin, dass bei der Einwirkung von Hitze bzw. offener Flamme giftige und äusserst korrosive Gase freigesetzt werden. Zur Beseitigung dieses Nachteiles wurden daher die Halogenverbindungen, insbesondere im Falle von Polyamiden, durch niedermolekulare stickstoffhaltige Verbindungen, insbesondere Triazinverbindungen, wie beispielsweise Cyanursäure, Melamin und Melamincyanurat, ersetzt. So beschreibt beispielsweise die DE-A 27 40 092 die Verwendung von Melamincyanurat zum Flammfestmachen von Polyamiden.

Jedoch besitzen Polymere, die unter Einsatz der zuletzt genannten Stoffklasse flammfest eingestellt worden sind, Nachteile, die darin bestehen, dass sie meist nur unter engen Verarbeitungsbedingungen verformt werden können und, was noch schwerwiegender ist, bei Flammeinwirkung durch ihre Additive beschleunigt abgebaut werden und zu fliessen beginnen. Liegen versteifende Verstärkungsfasern vor, dann fördern diese durch eine Dochtwirkung das Brennen bzw. Weiterbrennen, so dass mit derartigen Materialien eine Flammfesteinstellung faserverstärkter Polymerer nicht möglich ist.

Es wurde daher intensiv nach Verbindungen gesucht, welche diese Nachteile nicht aufweisen.

Als erster sehr wesentlicher Vertreter einer solchen neuen Stoffklasse wurde Aluminiumhydroxid eingeführt. Es liegt in feinteiliger, meist kugeliger Form vor, so dass es ohne wesentliche Beeinträchtigung der Flexibilität auch in Elastomeren, wie Kabelmassen, eingesetzt werden kann.

Seine flammverzögernde Wirkung beruht auf der ab 190°C beginnenden Abspaltung von Wasser. Dies macht seinen Einsatz in thermoplastisch verarbeitbaren Polyamidformulierungen unmöglich. Daher wurde mit der Prüfung von Magnesiumhydroxid, welches erst ab 340°C Wasser abspaltet, als flammfest machendes Mittel für hochwertige thermoplastische Massen, wie beispielsweise Polyamidmassen, begonnen.

In "Plastics and Rubber Processing and Applications", 6, (1986) 169 - 175 werden die Herstellung sowie die Wirkungsweise und Anwendung von Magnesiumhydroxid als flammfest machendes Mittel für Polypropylen beschrieben. Die spezifische Oberfläche des verwendeten und üblicherweise aus Meerwasser gewonnenen Magnesiumhydroxids liegt bei 40 $m^2$/g.

Zur Beschreibung der Eigenschaften werden in dieser Literaturstelle Massen mit Anteilen von 50 und 60 Gew.% Magnesiumhydroxid und Aluminiumhydroxid aufgeführt und gezeigt, dass hochwirksame Mischelemente zu ihrer Herstellung notwendig sind.

Um die Einarbeitung der in diesem bekannten Falle hohen Gewichtsanteile an Magnesiumhydroxid in technischem Massstabe zu gewährleisten, werden in der JP-A 12 943/1978 für Mischungen aus Polyolefinen mit bis zu 70 Gew.% Magnesiumhydroxid grosse Mengen an ungesättigten Metallseifen verwendet.

Ein weiterer Nachteil der bekannten Antiflammmittel besteht darin, dass sie zu einer Wanderung (Migration) an die Oberfläche neigen, wodurch für einen Einsatz im Elektro- bzw. Isolationsbereich wichtige Eigenschaften, wie die elektrische Durchschlagfestigkeit bzw. Kriechstromfestigkeit, nachteilig beeinflusst werden. Dies gilt insbesondere für halogenhaltige Zusätze.

Die flammfest machende Wirkung der bekannten Magnesiumverbindungen beruht auf einem Zusammenwirken mehrerer Vorgänge, und zwar der Abgabe von Wasserdampf, dem Kühleffekt der endothermen Wasserabspaltung, der Bildung eines Schutzgasschleiers, der Behinderung des Sauerstoffzutritts sowie der Bildung einer abschirmenden Magnesiumoxidschicht. In diesem Zusammenhang ist die US 4 098 762 zu erwähnen, welche ein mit einem anionenaktiven Emulgator, beispielsweise Natriumstearat, beschichtetes Magnesiumhydroxid beschreibt, das sich als flammfest machender Zusatz für apolare und stark hydrophobe Polymere, d.h. insbesondere für Polyolefine, eignet.

Die EP 0 052 868 beschreibt eine spezielle Kombination aus einem Thermoplasten, mit einem Alkalioleat-beschichteten Magnesiumhydroxid und 0,1 bis 10 Gew.% Magnesium- und/oder Aluminiumoleat. Mit diesen Massen kann der unten beschriebene Test nur bis zu einer Prufkörperdicke von minimal 3,2 mm durchgeführt werden.

Der Nachteil dieser Kombination besteht darin, dass die Doppelbindungen der eingesetzten Oleate oxidationsempfindlich sind und sie sich bei Verarbeitungstemperaturen von etwa 300°C zu zersetzen beginnen, was eine Verfärbung der Massen, eine Verschlechterung der mechanischen Eigenschaften sowie der flammfestmachenden Wirkung bedingt. Für alle Doppelbindungen enthaltenden Zusätze gilt, dass sie im Dauergebrauch unter der Einwirkung von Temperatur und Licht Oxidationsvorgängen an den Doppelbindungen Unterliegen, die zu Vergilbungen bzw. Farbänderungen führen. Solche Zusätze migrieren stark, was zu Oberflächenbelägen und damit einer Verschlechterung der elektrische Eigenschaften führt.

EP 0 335 165 B1

Das Antiflammverhalten von Kunststoffmaterialien wird in zweckmässiger Weise anhand der sogenannten UL-94-Klassifizierung ermittelt, die von der Underwriters Laboratories Inc. entwickelt worden ist (beste Bewertung VO, abfallend über V1, V2 bis HB ( = high burning).

Der Erfindung liegt die Aufgabe zugrunde, zur Beseitigung der vorstehend geschilderten Nachteile des Standes der Technik thermoplastisch verarbeitbare Polyamidformmassen zu schaffen, die zur Herstellung von Förmkörpern verwendbar sind, und die sich dadurch auszeichnen, dass sie sich ohne Zusätze wandernder (migrierender) Verarbeitungshilfsmittel zu steifen und gleichzeitig selbstverlöschenden Formkörpern der Bewertungsstufe VO auch für sehr dünne, z.B. 1,6mm dicke Prüfstabe, gemäss der vorstehend angegebenen Klassifizierung UL-94 verarbeiten lassen, die darüber hinaus hohe Kriechstromfestigkeiten zeigen, die das Niveau von 550 Volt nicht unterschreiten und ausserdem bei der Einwirkung von Wärme und Licht keine Verfärbungen erfahren. Weiterhin soll ein Verfahren zur Herstellung dieser Polyamidformmassen angegeben werden. Diese Aufgabe wird durch die Polyamidformmassen des Patentanspruchs 1, welche aus

I 25 bis 40 Gew.% eines thermoplastischen Polyamids,

II 40 bis 70 Gew.% plättchenförmiger Magnesiumhydroxidteilchen mit einer spezifischen Oberfläche von weniger als $18m^2/g$,

III 0,1 bis 20 Gew.% eines Olefinhomo- oder Copolymeren mit funktionellen Gruppen, die mit Magnesiumhydroxid zu reagieren vermögen sowie

IV 3 bis 30 Gew.% einer inerten Verstärkungsfaser und gegebenenfalls zusätzlichen verwendungs- und/oder verfahrensbedingten Additiven, wobei sich die Mengen der Mischungskomponentenen I bis IV auf 100 Prozent ergänzen, bestehen bzw. durch das Verfahren nach Anspruch 11 bzw. durch Anspruch 16 gelöst.

In den Unteransprüchen sind vorteilhafte Ausführungsformen der Erfindung aufgeführt.

Die erfindungsgemäßen Massen lassen sich bei Temperaturen von 300°C verformen, ohne dass dabei Abbauvorgänge auftreten, so dass sie auch für die Herstellung Von dünnwandigen Teilen geeignet sind, wobei Formkörper mit hoher Steifigkeit und mechanischen Eigenschaften erhalten werden, wie sie z.B. für Funktionsteile im Elektrobereich erforderlich sind. Ferner zeigen die erfindungsgemässen Formmassen eine deutlich verkürzte Brenndauer nach Entfernung der Flamme, wobei sie die Bewertungsstufe VO erreichen, beim Beflammen gemäss der Norm UL-94 nicht abtropfen, d.h. im Test keine watteentzündenden sogenannten Chunks bilden und im Schadensfall ihre Funktionstätigkeit in einem hohen Ausmasse beibehalten, weil sie keine korrosive Gase entwickeln, womit das Entstehen von Kurzschlüssen weitgehend vermieden wird.

Eine wesentliche Rolle in den erfindungsgemässen Formmassen spielt die Komponente III, d.h. das Olefinhomo- oder Copolymere mit funktionellen Gruppen das in überraschender Weise folgende vorteilhafte Eigenschaften bewirkt:

Man kann auf die bisher üblichen, doppelbindungshaltigen Emulgatoren für Magnesiumhydroxid, wie Natriumoleat, verzichten, da die Einarbeitbarkeit der Komponenten II und IV deutlich verbessert wird. Ferner kann der Magnesiumhydroxidanteil deutlich gesenkt werden, die Benetzung von Magnesiumhydronid und Verstärkungsmaterialien, wie Verstärkungsfasern, beispielsweise aus Glas, wird deutlich verbessert und auch deren Einarbeitung wird erleichtert. Ferner werden die mechanischen Eigenschaften deutlich verbessert, beispielsweise der Zug-E-Modul, die Biegefestigkeit und die Schlagzähigkeit der aus den Formmassen erzeugten Formkörper, wobei darüber hinaus die Brenndauer nach der Entfernung der Flamme deutlich verkürzt wird und die Bewertungsstufe VO im UL-94 Entflammbarkeitstest auch bei dünnwandigen Prüfkörpern erreicht wird.

Die Olefinhomo- und Copolymere mit funktionellen Gruppen können beispielsweise aus Olefinen, insbesondere $\alpha$-Olefinen, mit 2 bis 8 Kohlenstoffatomen bestehen, wobei sich die Olefincopolymere vorzugsweise aus Ethylen und einem oder mehreren $\alpha$-Olefinen mit 2 bis 8 Kohlenstoffatomen zusammensetzen, wie Propylen, Buten-1, Hexen-1 oder Oktenen als Comonomere. Vorzugsweise beträgt der Schmelzindex, gemessen bei 190°C, 0,1 bis 30 g pro 10 Min., insbesondere 0,4 bis 4,0 g pro 10 Min. Sie werden in Anteilen von 0,1 bis 20 Gew.-%, bevorzugt von 0,5 bis 10 Gew.-% und in ganz besonders bevorzugter Weise in Mengen von 1 bis 5 Gew.-% eingesetzt.

Diese Olefinhomo- und Copolymere III tragen funktionelle Gruppen, welche mit dem Magnesiumhydroxid zu reagieren vermögen, vorzugsweise sauer wirkende Gruppen, wie Carboxyl- oder Säureanhydridgruppen. Die Einführung dieser Gruppen in die Olefinhomo- und Copolymere kann durch Aufpropfen oder durch Einbau in das Grundgerüst erfolgen, beispielsweise unter Verwendung von Maleinsäureanhydrid, Acrylsäure oder Methacrylsäure oder ihrer Derivate, wie ihrer Ester, als Copolymere. Es können auch Gemische dieser Homo- und Copolymere verwendet werden, wobei die sauren Gruppen teilweise durch geeignete Kationen, wie $Na^+$ oder $Zn^{++}$, neutralisiert sein können.

3

Handelsübliche Typen dieser Copolymere enthalten die funktionellen Gruppen in Mengen von 0,1 bis 5,0 Gew.%, insbesondere von 0,3 bis 3,0 Gew.%, bezogen auf das Olefinhomo- oder Copolymere. Bevorzugt eingesetzt werden Copolyolefine aus Ethylen und Propylen mit einem Propylenanteil von 15 bis 40 Gew.%, die mit Acrylsäure oder Maleinsäureanhydrid funktionalisiert sind.

Als thermoplastische Polyamide I kommen erfindungsgemäss im Prinzip alle Polyamide mit genügend hoher Fliessfähigkeit der Schmelze, um den hohen Füllstoffanteil aufnehmen zu können, in Frage. Besonders geeignet sind die aliphatischen semikristallinen Polyamide, wie PA-6, PA-11 und -12 sowie PA-6.6, -6.9, -6.10, -6.12 und -6.13, d.h. solche aus Diaminen und Dicarbonsäuren mit bis zu 36 Kohlenstoffatomen, wie beispielsweise aus dimerisierter Fettsäure, wobei ferner Gemische aus derartigen Polyamiden in Frage kommen. Man kann auch segmentierte Polyamide verwenden, beispielsweise solche, die Polyetherweichblöcke enthalten, ferner Polyamidgemische aus semikristallinen und amorphen Polyamiden, wobei sich Gemische, bei denen der amorphe Anteil unter 30 Gew.% liegt, besonders eignen. Auch Polyamidlegierungen mit anderen Thermoplasten, bei denen Polyamid die eigenschaftsbestimmende Komponente darstellt, sind verwendbar. In zweckmässiger Weise besitzen die erfindungsgemäss eingesetzten thermoplastischen Polyamide I Schmelzviskositäten im Bereich von 100 bis 2000 Pa•s gemessen bei 270°C und einer Belastung von 122,6 N (DIN 53 735). Die Polyamide I liegen in Mengen von 25 bis 40 Gew.-%, insbesondere 25 bis 35 Gew.-%, bezogen auf die gesamte Masse, vor.

Die plättchenförmigen Magnesiumhydroxidteilchen (als Komponente II der erfindungsgemäßen thermoplastisch verarbeitbaren Polyamidformmassen) besitzen eine spezifische Oberfläche von weniger als 18 $m^2/g$ bis herab zu 2 $m^2/g$ und insbesondere von weniger als 12 $m^2/g$ und in ganz bevorzugter Weise von 4 bis 8 $m^2/g$. Bevorzugt werden möglichst einheitliche gut kristallisierte und nicht oder nur geringfügig agglomerisierte Teilchen verwendet, die bei der Einarbeitung in die Masse unter Scherwirkung leicht aufgeschlossen werden können, wobei eine plättchenförmige Struktur mit einem Verhältnis Durchmesser/Dicke (D/L) (Aspekt Ratio) nicht unter 3 und in zweckmäßiger Weise bei 6 oder darüber vorliegen sollte. Ganz besonders bevorzugt wird ein plättchenförmiger $MgOH_2$-Typ mit einem Aspekt Ratio nicht unter 4 und einer spezifischen Oberfläche von weniger als 12 $m^2/g$ in einer Menge von 40 bis 70 Gew.-%, insbesondere 45 bis 60 Gew.-% und in ganz besonders bevorzugter Weise 50 bis 55 Gew.-%, der Formmasse. Ein wesentlicher Vorteil der erfindungsgemäßen Magneisumhydroxidteilchen besteht darin, daß sie keinen Überzug aufweisen müssen.

Geeignete Magnesiumhydroxidtypen sind im Handel (beispielsweise unter der Bezeichnung Kisuma E5 von der Firma Kyowa, Tokyo, Japan bzw. Ankermag H999 von der Firma Veit'sche Magnesitwerke in Leoben, Österreich) erhältlich.

Die Verstärkungsfasern IV sind gegenüber den Komponenten der erfindungsgemäßen Formmassen inerte Fasern, wie Mineralfasern, Kohlefasern oder deren Mischungen, wobei insbesondere Glasfasern eingesetzt werden.

Zur Verbesserung der Haftung in der Matrix werden die Fasern, insbesondere die Glasfasern, vorzugsweise mit einem polymerfreundlichen Überzug versehen, wobei Haftschichten mit Aminofunktionen besonders bevorzugt werden, beispielsweise aus den bekannten Aminosilanen (beispielsweise die Typen A 1100 und A 1120 der Fa. Union Carbide, USA). Außer Glasfasern werden insbesondere auch Asbestfasern, Kaliumtitanatfasern oder Whiskers oder Gemische davon verwendet. Die Fasern werden vorzugsweise in einer Menge von 5 bis 30 Gew.-%, insbesondere 10 bis 15 Gew.-%, bezogen auf die gesamte Masse, eingesetzt.

Als zusätzliche verwendungs- oder verfahrensbedingte Additive seien Farbstoffe, Pigmente, Verarbeitungshilfsmittel, Entformungsmittel, Stabilisatoren beispielsweise gegenüber Hitzeabbau, Abbau während der Verarbeitung, Abbau durch Lichteinwirkung etc. sowie mineralische Füllstoffe, erwähnt, sofern sie bei den hohen Verarbeitungstemperaturen thermisch stabil sind und keine Verfärbungen bewirken.

Verarbeitungshilfsmittel oder Additive, die das Dosieren des Magnesiumhydroxids besonders im kontinuierlichen Verfahrensablauf erleichtern, wie z.B. speziell dafür entwickelte mineralische Additive, werden in Mengen von 0,1 bis 5 % des Gewichtsanteils des Magnesiumhydroxids bevorzugt zusammen mit dem Magnesiumhydroxid, besonders bevorzugt als inniges Gemisch, der Schmelze der eingesetzten Polymeren zugesetzt.

Die erfindungsgemässen Polyamidformmassen können durch Vermischen der thermoplastischen Komponenten in der Schmelze und Einmischen der weiteren Komponenten hergestellt worden. Dieses Vermigchen kann chargenweise oder kontinuierlich unter Einsatz von bekannten Mischaggregaten erfolgen. Bevorzugt werden dabei kontinuierliche Verfahren, wobei sogenannte Co-Kneter oder Doppelwellenextruder vorteilhaft sind.

Die Herstellung der erfindungsgemässen Messen kann in einer oder mehreren Verfahrensstufen erfolgen. Z.B. werden die thermoplastischen Komponenten I und III mit Verarbeitungshilfsmitteln und Stabilisatoren und einem Teil des Magnesiumhydroxids (Komponente II) trocken vorgemischt. Dieses Gemisch wird beispielsweise in einem zweiwelligen Mischaggregat aufgeschmolzen und vorcompoundiert. Der Rest des Magnesiumhydroxids wird dann in einem zweiten Extrusionsdurchgang, gegebenenfalls in mehreren Teilmengen, in konstanten Gewichtsanteilen mit kontinuierlich arbeitenden Einrichtungen, z.B. Bandwaagen oder Stopfschnecken, zudosiert. Dazu eignen sich besonders Mischaggregate mit vergrössertem freien Volumen am Ort der Füllstoffaufgabe. Die Komponente IV wird vorteilhaft zuletzt und unter möglichst schonenden Bedingungen zugegeben, um eine Faserschädigung gering zu halten. Beim Einarbeiten der Komponenten IV und II müssen die Temperatur der Schmelze und die Drehzahl der Vorrichtung so eingestellt werden, dass die Schmelze die Füllstoffkomponenten ohne Polymerabbau aufnehmen kann.

Die bevorzugten Verarbeitungztemperaturen liegen in Abhängigkeit vom Gewichtsanteil der Additive und dem MFI-Wert der verwendeten Polyamide um mindestens 50°C über dem Polyamidschmelzpunkt.

Die folgenden Beispiele und Vergleichsbeispiele erläutern die Erfindung.

Beispiel 1A.

Ein Gemisch aus mittelviskosem Polyamid-6 mit einer Schmelzviskosität von 320 Pa•s (270 °C, 122,6 N) und einem maleinsäureanhydridgepfropften Copolyolefingemisch, das aus den Copolymeren Ethylen/Proplylen und Ethylen/Buten-1 besteht und jeweils mit 0,3 Gew.% Maleinsäureanhydrid gepfropft ist, sowie 0,2 Gew.% Loxiol® G40 der Fa. Henkel, BRD, wird mit 40 Gew.% Magnesiumhydroxidteilchen, die von der Firma Kyowa, Tokyo, Japan, (unter der Warenbezeichnung Kisuma 5E) im Handel erhältlich sind und eine spezifische Oberfläche von < 8 m$^2$/g besitzen, in einem Taumelmischer trocken vorgemischt. Das Gemisch wird auf einem Zweiwellenkneter vom Typ ZSK 30 der Fa. Werner & Pfleiderer, Stuttgart, bei einer Temperatur der Schmelse von 270 - 300°C und einer Drehzahl von 150 UpM compoundiert und das Granulat getrocknet.

Für den zweiten Extrusionsdurchgang wird das Granulat mit dem verbleibenden Magnesiumhydroxidanteil trocken vorgemischt und anschliessend bei 270 bis 300°C compoundiert und erneut zu Granulat verarbeitet. In den Beispielen, die mit Glasfasern ausgeführt werden, wird die Glasmenge ab Roving kontinuierlich durch eine Gehäuseöffnung kurz vor der Düse in die Schmelze eingezogen.

Nach der Trocknung auf einen Wassergehalt unter 0,05 Gew.% wird das Granulat auf einer Spritzgussmaschine vom Typ Allrounder 320/210/750 der Fa. Arburg, BRD, bei einer Schmelztemperatur von ca. 280°C und einer Formtemperatur von 80° C zu Prüfkörpern entsprechend den DIN-Normen 53 453 und 53 455 sowie zu Flachstäben gemäss der Norm UL-94 verarbeitet.

Beispiel 1B.

Im Gegensatz zu den Massen entsprechend den Beispielen 1A-8 wird die zu 1A in den Hauptkomponenten identische Formulierung in einem Extrusionsschritt hergestellt. Dem Gemisch der Polyamid- und Copolyolefingranulate werden 0,2 Gew.% Loxiol® 728 der Fa. Henkel zugefügt und in einem Taumeltrockner eine homogene Mischung hergestellt. Diese wird einem Zweiwellenextruder des Typs ZE40A der Fa. Berstorff, Hannover, kontinuierlich zugefügt und bei einer Massetemperatur von 260 - 300 °C sowie einer Schneckendrehzahl von 120 U/Min. vorcompoundiert. Die Zugabe des gesamten Magnesiumhydroxids sowie des Schnittglases in die Polymerschmelze erfolgt kontinuierlich durch Dosierbandwaagen sowie mit einer Stopfschnecke durch eine spezielle Oeffnung im Extruder an der Stelle, an der die Volumenvergrösserung beginnt. Der resultierende Strang wird granuliert.

In der Tabelle 1 sind die Ergebnisse der vorstehenden Beispiele sowie weiterer Beispiele und in Tabelle 2 sind Vergleichsbeispiele zusammengefasst.

Beispiele 9 und 10.

In einem Vorgehen analog Beispiel 1A wird unter Einhaltung der Bewertungsstufe VO zur Optimierung der mechanischen Eigenschaften der Glasanteil erhöht und die Menge Magnesiumhydroxid minimal gehalten, die zur einwandfreien und problemlosen Dosierung jedoch mit 0,50 Gew.% Silicumdioxid innig vermischt wurde, wobei neben Kisuma 5E der Typ Ankermag H999 der Veit'schen Magnesitwerke, eingesetztwurde. Für letzteres werden vom Hersteller für die spezifische Oberfläche 11 m$^2$/g und für den Aspect Ratio 4 angegeben.

| Beispiel No.<br>Zusammensetzung in Gew.% | | 1B | 1A | 2 | 3 | 4 | 9 | 10 |
|---|---|---|---|---|---|---|---|---|
| PA-6 ( Schmelz 270°C;<br>122,6 N : 320 Pa·s) | | 30,5 | 30,5 | 27,4 | 30,0 | 33,0 | 28,8 | 29,5 |
| Copolyolefin mit<br>funktionellen Gruppen | | 4 | 4 | 3,6 | 4 | 4 | 4 | 4 |
| $SiO_2$ | | - | - | - | - | - | 0,5 | 0,5 |
| Mg(OH)$_2$ gem. Erfindung | | 53 | 53 | 54 | 50 | 47 | 48,5 | 48,7 |
| Coat | | + | + | + | + | + | - | + |
| Spez. Oberfl. | m²/g | ∠8 | ∠8 | ∠8 | ∠8 | ∠8 | <11 | ∠8 |
| Glasfasern** | | 12,5 | 12,5* | 16 | 16 | 16 | 18,2 | 17,3 |

| | NORM | Ein-<br>heit | | | | | | | |
|---|---|---|---|---|---|---|---|---|---|
| Bewertung Brenntest<br>1,6mm Stäbe<br>7 Tage 70°C gelagert. | Bewer-<br>tung<br>nach<br>UL-94 | | VO | VO | VO | VO | VO | VO | VO |
| Brenndauer<br>Summe v. 5 Prüfstäben. | | Sek. | 30 | 8 | 8 | 13 | 13 | 10 | 7 |
| Schlagzähigkeit<br>trocken. | DIN<br>53453 | kJ/m² | 17 | 32 | 26 | 18 | 26 | 21 | 20 |
| Schlagzähigkeit<br>konditioniert | DIN<br>53453 | kJ/m² | 22 | 23 | 20 | 22 | 26 | 18 | 16 |
| Kerbschlagzähigkeit<br>trocken | DIN<br>53453 | kJ/m² | 4,0 | 5,2 | 6,5 | 5,6 | 6,1 | 4,8 | 4,6 |
| Kerbschlagzähigkeit<br>konditioniert | DIN<br>53453 | kJ/m² | 7,0 | 7,0 | 6,0 | 6,5 | 7,0 | 5,1 | 4,7 |
| Biege-E-Modul<br>trocken | DIN<br>53452 | N/mm² | 7640 | 7530 | 8320 | 8020 | 7550 | 8720 | 8630 |
| Biege-E-Modul<br>konditioniert | DIN<br>53452 | N/mm² | 4190 | 4010 | 4815 | 4525 | 4660 | 5110 | 5240 |
| Kriechstromfestig-<br>keit KC | DIN<br>53480 | Volt | 600 | 600 | 600 | 600 | 600 | 600 | 600 |

\* enthält Schnittglas der Fa. Owens Corning (USA) 4,5mm,
Durchmesser 10µm
\*\* Rovings "Typ X20" Fa. Silenka (NL), Durchmesser 10µ

| Vergleichsbeispiel No. Zusammensetzung in Gew.% | | | 5 | 6 | 7 | 8 |
|---|---|---|---|---|---|---|
| PA-6 ( Schmelz 270°C; 122,6 N : 320 Pa's) | | | 40 | 37 | 33 | 37 |
| Copolyolefin mit funktionellen Gruppen | | | 6 | 5 | – | 5 |
| $Mg(OH)_2$ gem. Erfindung | | | 54 | 58 | 52 | – |
| Coat | | | + | + | + | – |
| Spez. Oberfläche. | m²/g | | $< 8$ | $< 8$ | $< 8$ | $> 18$ |
| $Mg(OH)_2$ * | | | – | – | – | 58 |
| Glasfasern** | | | – | – | 15 | – |

| | NORM | Einheit | | | | |
|---|---|---|---|---|---|---|
| Bewertung Brenntest 1,6mm Stäbe 7 Tage 70°C gelagert. | Bewertung nach UL-94 | | HB | V1 | V1 | HB |
| Brenndauer Summe v. 5 Prüfstäben. | | Sek. | $> 200$ | 68 | 51 | 202 |
| Schlagzähigkeit trocken. | DIN 53453 | kJ/m² | 25 | – – | 27 | 10 |
| Schlagzähigkeit konditioniert | DIN 53453 | kJ/m² | O.B. | – – | 15 | 31 |
| Kerbschlagzähigkeit trocken | DIN 53453 | kJ/m² | 2,0 | 3,8 | 5,0 | 3,0 |
| Kerbschlagzähigkeit konditioniert | DIN 53453 | kJ/m² | 8,0 | 5,0 | 5,4 | 4,0 |
| Biege-E-Modul trocken | DIN 53452 | N/mm² | 2360 | 2790 | 13670 | 4310 |
| Biege-E-Modul konditioniert | DIN 53452 | N/mm² | 1120 | 1680 | 7840 | 2380 |
| Kriechstromfestigkeit KC | DIN 53480 | Volt | 600 | 600 | 600 | 600 |

* "VerasmagSZ" Fa. Morton Thiokol Inc. (USA)
** Rovings "Typ X20" Fa. Silenka (NL), Durchmesser 10µ

Die Beispiele mit Glasfaseranteil zeigen, dass infolge des erwähnten synergistischen Effektes VO mit weniger als 50 Gew.% Magnesiumhydroxid erreicht wird.

Auch der Einfluss der infolge der grösseren Scherwirkung des Berstorff-Zweiwellenextruders kürzeren Glasfasern wird sichtbar (Beispiel 1B).

Ohne Glasfasern wird die für die Bewertungsstufe VO erforderliche mittlere Gesamtbrenndauer von 50 Sek. für 5 Prüfstäbe bereits überschritten (Beispiel 6), während sie mit nicht erfindungsgemässem Magnesiumhydroxid bei weitem nicht erreicht wird (Beispiel 8 : 202 Sekunden).

Im Vergleich der Beispiele 1B und 7 wird der Einfluss des Olefincopolymers mit funktionellen Gruppen ersichtlich.

**Patentansprüche**

1. Durch Magnesiumhydroxid flammhemmend eingegtellte faservergtärkte thermoplastisch verarbeitbare Polyamidformmasse, bestehend aus:
   I 25 bis 40 Gew.% eines thermoplastischen Polyamids,
   II 40 bis 70 Gew.% plättchenförmiger Magnesiumhydroxidteilchen mit einer spezifischen Oberfläche von weniger als 18m$^2$/g,
   III 0,1 bis 20 Gew.% eines Olefinhomo- oder Copolymeren mit funktionellen Gruppen, die mit Magnesiumhydroxid zu reagieren vermögen sowie
   IV 3 bis 30 Gew.% einer inerten Verstärkungsfaser und gegebenenfalls zusätzlichen verwendungs- und/oder verfahrensbedingten Additiven, wobei sich die Mengen der Mischungskomponentenen I bis IV auf 100 Prozent ergänzen.

2. Formmasse nach Anspruch 1, dadurch gekennzeichnet, dass das Polyamid I ein semikristallines lineares Homo- oder Copolyamid aus Monomeren mit 6 bis 36 Kohlenstoffatomen, ein amorphes Homo- oder Copolyamid aus substituierten oder nicht substituierten aliphatischen, cycloaliphatischen oder aromatischen Monomeren, ein Blockpolyamid mit Polyethersegmenten, ein Copolyamid aus Gemischen der genannten Bestandteile oder eine Legierung, in denen diese Polyamide die Hauptkomponente darstellen, ist und 25 bis 35 Gew.% der Summe aus I, II, III und IV ausmacht.

3. Formmasse nach Anspruch 1, dadurch gekennzeichnet, dass die Verstärkungsfaser IV aus Mineral- oder Kohlefasern oder Mischungen davon, insbesondere aus Glasfasern, besteht und in einer Menge von 5 bis 30 und insbesondere 10 bis 15 Gew.% vorliegt.

4. Formmasse nach Anspruch 3, dadurch gekennzeichnet, dass die Verstärkungsfasern mit einem polymerfreundlichen Ueberzug vergehen sind.

5. Formmasse nach Anspruch 1, dadurch gekennzeichnet, dass die Magnesiumhydroxidteilchen II in einer Menge von 40 bis 60 Gew.% und insbesondere 45 bis 55 Gew.% vorliegen.

6. Formmasse nach Anspruch 1, dadurch gekennzeichnet, dass die Olefinhomopolymeren aus Olefinen mit 2 bis 8 Kohlenstoffatomen und die Olefincopolymeren aus 2 oder mehreren der genannten Monomeren und insbesondere aus Ethylen und Olefinen mit 3 bis 8 Kohlenstoffatomen, insbesondere $\alpha$-Olefinen, vorzugsweise Ethylen und Propylen, bestehen und funktionelle Gruppen tragen, die mit Magnesiumhydroxid zu reagieren vermögen.

7. Formmasse nach Anspruch 6, dadurch gekennzeichnet, dass die funktionellen Gruppen aus sauren Gruppen bestehen,

8. Formmasse nach den Ansprüchen 6 bis 7, dadurch gekennzeichnet, dass das Olefinhomo- oder Copolymere III einpolymerisierte und/oder aufgepfropfte Monomereinheiten mit Carboxyl- oder Säureanhydridgruppen enthält.

9. Formmasse nach den Ansprüchen 6 bis 8, dadurch gekennzeichnet, dass das Polymere III ein Copolymeres aus Ethylen und höheren $\alpha$-Olefinen, insbesondere Propylen, Buten-I, Hexen-I und/oder Octenen ist, und insbesondere mit Maleinsäureanhydrid gepfropft ist und in einer Menge Von 0,5 bis 10 Gew.%, insbesondere 1 bis 5 Gew.%, vorliegt.

10. Formmasse nach Anspruch 8, dadurch gekennzeichnet, daß die einpolymerisierten Einheiten aus Acryl- oder Methacrylsäureeinheiten bestehen.

11. Verfahren zur Herstellung einer Formmasse gemäß den Ansprüchen 1 bis 10, dadurch gekennzeichnet, daß das Magnesiumhydroxid II in bekannter Weise während der Extrusion der Schmelze eines Gemisches, das im wesentlichen aus dem thermoplastischen Polyamid I und dem funktionalisierten Olefinhomo- oder Copolymeren III besteht, zugesetzt wird.

**12.** Verfahren nach Anspruch 11, dadurch gekennzeichnet, daß die Zugabe des Magnesiumhydroxids in mehreren Extrusionsdurchgängen erfolgt.

**13.** Verfahren nach einem der vorhergehenden Ansprüche, dadurch gekennzeichnet, daß als Additive feinteilige kugelige Mineralien, insbesondere Mikroglaskugeln oder Siliziumdioxid, eingesetzt werden.

**14.** Verfahren nach Anspruch 13, dadurch gekennzeichnet, daß Siliziumdioxid in Mengen von 0,1 bis 5 Gew.-%, bezogen auf das Magnesiumhydroxid, zusammen mit diesem, insbesondere als inniges Gemisch, zugegeben wird.

**15.** Verfahren nach einem der vorhergehenden Ansprüche, dadurch gekennzeichnet, daß die Verstärkungsfaser nach dem Magnesiumhydroxid zugesetzt wird.

**16.** Verwendung der Formassen gemäß den Ansprüchen 1 bis 10 zur Herstellung von Formkörpern.

**Claims**

**1.** Fibre-reinforced thermoplastically-workable polyamide moulding material made flame-resistant by the introduction of magnesium hydroxide, comprising:

I 25 to 40 wt % of a thermoplastic polyamide,

II 40 to 70 wt % platelet-like magnesium hydroxide particles having a specific surface area of less than 18 $m^2$/g,

III 0.1 to 20 wt % of a functionalised olefin homo-or copolymer having functional groups capable of reacting with magnesium hydroxide, and

IV 3 to 30 wt % of inert reinforcing fibres, and, as desired, in addition, additives for use and/or processing, whereby the amounts of components I to IV total 100%.

**2.** Moulding material according to claim 1, wherein the polyamide I is a semi-crystalline linear homo- or copolyamide derived from monomers having 6 to 36 carbon atoms, an amorphous homo- or copolyamide derived from substituted or non-substituted aliphatic, cycloaliphatic or aromatic monomers, a block polyamide having polyether segments, a copolyamide derived from mixtures of the given components or an alloy in which these polyamides comprise the main components, and constitutes 25 to 35 wt % of the total of I, II, III and IV.

**3.** Moulding material according to claim 1, wherein the reinforcing fibres IV are selected from mineral and carbon fibres and mixtures thereof, especially glass fibres, and are present in an amount of 5 to 30, preferably 10 to 15 wt %.

**4.** Moulding material according to claim 3, wherein the reinforcing fibres are provided with a polymer-compatible coating.

**5.** Moulding material according to claim 1, which comprises 40 to 60 wt %, and preferably 45 to 55 wt % of the magnesium hydroxide particles II.

**6.** Moulding material according to claim 1, wherein the olefin homopolymers are derived from olefins having 2 to 8 carbon atoms and the olefin copolymers are derived from 2 or more such olefins, particularly ethylene and olefins having 3 to 8 carbon atoms, preferably ethylene and propylene, and carry functional groups which allow reaction with magnesium hydroxide.

**7.** Moulding material according to claim 6, wherein the functional groups comprise acid groups.

**8.** Moulding material according to claims 6 to 7, wherein the olefin homo- or copolymer III contains polymerised-in and/or grafted monomer units having carboxyl or acid anhydride groups.

**9.** Moulding material according to claims 6 to 8, wherein the polymer III is a copolymer of ethylene and higher α-olefins, especially propylene, butene-1, hexene-1 and/or octenes, and in particular is grafted with maleic acid anhydride and in an amount of 0.5 to 10 wt %, especially 1 to 5 wt %.

**10.** Moulding material according to claim 8, wherein the polymerised-in units comprise acrylic or methacrylic acid units.

**11.** Process for the preparation of a moulding material according to claims 1 to 10, characterised in that the magnesium hydroxide (II) is added in known manner during the extrusion of the melt to a mixture that comprises essentially the thermoplastic polyamide I and the functionalised olefin homo- or copolymer III.

**12.** Process according to claim 11, characterised in that the addition of the magnesium hydroxide is conducted in a plurality of extrusion passes.

**13.** Process according to one of the preceding claims, characterized in that fine particulate spherical minerals, in particular microglass spheres or silicon dioxide, are added as additive.

**14.** Process according to claim 13, characterised in that silicon dioxide is added in amounts of 0.1 to 5% by wt, based on the magnesium hydroxide, together therewith, preferably as an intimate mixture.

**15.** Process according to one of the preceding claims, characterized in that the reinforcing fibre is added after the magnesium hydroxide.

**16.** Use of the moulding material according to claims 1 to 10 for the preparation of moulded bodies.

**Revendications**

**1.** Matière à mouler en polyamide, renforcée par des fibres, que l'on peut mettre en oeuvre par voie thermoplastique et dont la combustion est retardée par de l'hydroxyde de magnésium, et qui est constituée de :
I) 25 à 40 % en poids d'un polyamide thermoplastique,
II) 40 à 70 % en poids de particules d'hydroxyde de magnésium en force de paillettes, dont la surface spécifique est inférieure à 18 m$^2$/g,
III) 0,1 à 20 % en poids d'un homopolymère ou d'un copolymère d'oléfines comportant des groupes fonctionnels qui peuvent réagir avec l'hydroxyde de magnésium, et
IV) 3 à 30 % en poids de fibres inertes de renfort et d'éventuels adjuvants supplémentaires, introduits en fonction de l'utilisation et/ou du traitement envisagé, les quantités des composants I à IV du mélange se complétant à 100 %.

**2.** Matière à mouler conforme à la revendication 1, **caractérisée** en ce que le polyamide I est un homopolyamide ou un copolyamide linéaire semi-cristallin, obtenu à partir de monomères comportant de 6 à 36 atomes de carbone, un homopolyamide ou un copolyamide amorphe, obtenu à partir de monomères aliphatiques, cycloaliphatiques ou aromatiques, substitués ou non, un polyamide séquencé comportant des segments de polyéther, un copolyamide obtenu à partir du mélange des constituants cités, ou un alliage dans lequel ces polyamides constituent le composant principal, et en ce qu'il représents de 25 à 35 % en poids de la somme des composants I, II, III et IV.

**3.** Matière à mouler conforme à la revendication 1, **caractérisée** en ce que les fibres de renfort IV sont constituées de fibres minérales ou de fibres de carbone, ou de leurs mélanges, et en particulier de fibres de verre, et en ce qu'elles s'y trouvent en une proportion de 5 à 30 % en poids, et en particulier de 10 à 15 % en poids.

**4.** Matière à mouler conforme à la revendication 3, **caractérisée** en ce que les fibres de renfort sont munies d'un revêtement compatible avec les polymères.

**5.** Matière à mouler conforme à la revendication 1, **caractérisée** en ce que les particules d'hydroxyde de magnésium II s'y trouvent en une proportion de 40 à 60 % en poids, et en particulier de 45 à 55 % en poids.

**6.** Matière à mouler conforme à la revendication 1, **caractérisée** en ce que les homopolymères d'oléfines sont constitués d'oléfines comportant de 2 à 8 atomes de carbone, et les copolymères d'oléfines sont constitués de 2 des monomères cités ou plus, et en particulier, d'éthylène et d'oléfines comportant de 3 à 8 atomes de carbone, en particulier α-oléfines, et de préférence d'éthylène et de propylène, et en ce qu'ils portent des groupes fonctionnels qui peuvent réagir avec l'hydroxyde de magnésium.

7. Matière à mouler conforme à la revendication 6, **caractérisée** en ce que les groupes fonctionnels sont des groupes acides.

8. Matière à mouler conforme aux revendications 6 et 7, **caractérisée** en ce que l'homopolymère ou copolymère d'oléfines III contient des motifs monomères, incorporés dedans par polymérisation et/ou greffés dessus, et comportant des groupes carboxy ou anhydride d'acide.

9. Matière à mouler conforme aux revendications 6 à 8, **caractérisée** en ce que le polymère III est un copolymère d'éthylène et d'α-oléfines supérieures, en particulier de propylène, butène-1, hexène-1 et/ou octène, en ce que de l'anhydride maléique, en particulier, est greffé sur lui, et en ce qu'il se trouve en une proportion de 0,5 à 10 % en poids, et en particulier de 1 à 5 % en poids.

10. Matière à mouler conforme à la revendication 8, **caractérisée** en ce que les motifs incorporés par polymérisation sont des motifs d'acide acrylique ou d'acide méthacrylique.

11. Procédé de préparation d'une matière à mouler conforme aux revendications 1 à 10, **caractérisé** en ce que l'on ajoute l'hydroxyde de magnésium II, de façon connue, pendant l'extrusion d'une masse fondue d'un mélange constitué essentiellement du polyamide thermoplastique I et de l'homopolymère ou copolymère d'oléfines fonctionnalisé III.

12. Procédé conforme à la revendication 11, **caractérisé** en ce que l'addition de l'hydroxyde de magnésium s'effectue au cours de plusieurs passes d'extrusion.

13. Procédé conforme à l'une des revendications précédentes, **caractérisé** en ce que l'on utilise comme adjuvants des matières minérales se présentant sous forme de petites sphères, en particulier du dioxyde de silicium ou des micro-perles de verre.

14. Procédé conforme à la revendication 13, **caractérisé** en ce que l'on ajoute le dioxyde de silicium en une proportion de 0,1 à 5 % en poids, par rapport à l'hydroxyde de magnésium, et conjointement avec celui-ci, en particulier sous la forme d'un mélange intime.

15. Procédé conforme à l'une des revendications précédentes, **caractérisé** en ce que les fibres de renfort sont ajoutées après l'hydroxyde de magnésium.

16. Utilisation des matières à mouler conformes aux revendications 1 à 10 pour la fabrication de corps moulés.